# EUROPÄISCHE PATENTSCHRIFT

(11) **EP 2 909 054 B1**
(45) Veröffentlichungstag und Bekanntmachung des Hinweises auf die Patenterteilung: **01.03.2017**
(21) Anmeldenummer: 13730110.7
(22) Anmeldetag: 12.06.2013
(51) Int. Cl.: B60K 28/04, B60W 10/08, B60W 10/06, B60W 10/26, B60W 30/18, B60K 28/00, B60L 11/18

(54) **VERFAHREN ZUM BETREIBEN UND AUSSCHALTEN EINES KRAFTFAHRZEUGS UND ENTSPRECHEND BETRIEBENES KRAFTFAHRZEUG**
METHOD OF OPERATING AND SWITCHING OFF AN AUTOMOBILE VEHICLE AND CORRESPONDINGLY OPERATED VEHICLE
PROCÉDÉ POUR OPÉRER ET METTRE HORS MARCHE UN VÉHICULE AUTOMOBILE ET VÉHICULE AUTOMOBILE OPÉRÉ CONFORMÉMENT

(30) Priorität: 18.10.2012 DE 102012020408
(43) Veröffentlichungstag der Anmeldung: 26.08.2015
(73) Patentinhaber: Audi AG, 85045 Ingolstadt (DE)
(72) Erfinder: GEISSENHÖNER, Martin, 85055 Ingolstadt (DE); BRAND, Martin, 85055 Ingolstadt (DE)
(74) Vertreter: Herbst, Matthias Heinz
(86) Internationale Anmeldenummer: PCT/EP2013/001729
(87) Internationale Veröffentlichungsnummer: WO 2014/060055

(56) Entgegenhaltungen:
- FR-A1- 2 928 329
- US-A1- 2011 320 083
- US-A1- 2012 253 575

## Beschreibung

Die Erfindung betrifft ein Verfahren zum Betreiben eines Kraftfahrzeugs, bei welchem ein Antriebsmotor des Kraftfahrzeugs ausgeschaltet wird, wenn das Fahrzeug steht. Es werden wenigstens ein Antriebsmotor und eine Zündung des Kraftfahrzeugs ausgeschaltet, wenn ein Fahrer das Kraftfahrzeug verlässt. Beim Ausschalten des wenigstens einen Antriebsmotors und der Zündung wird das Erfülltsein wenigstens eines weiteren Kriteriums berücksichtigt. Des Weiteren betrifft die Erfindung ein Kraftfahrzeug.

Die nach dem Anmeldetag der vorliegenden Anmeldung veröffentlichte DE 10 2011 107 005 A1 beschreibt ein Verfahren zum Betreiben eines Kraftfahrzeugs, bei welchem bei laufendem Motor geprüft wird, ob ein Fahrer des Kraftfahrzeugs anwesend ist. Bei Erfassen einer Abwesenheit des Fahrers erfolgt eine automatische Abschaltung des Motors. Dies erfolgt jedoch nur dann, wenn das Kraftfahrzeug nach dem letzten Starten des Motors bewegt wurde.

Die DE 33 19 135 A1 beschreibt eine Antriebssteuereinrichtung für ein mit einem Verbrennungsmotor betriebenes Fahrzeug. Bei Vorliegen oder Eintreten bestimmter Bedingungen wird automatisch ein Signal zum Abschalten des Antriebs abgegeben. Hierbei kann ein automatisches Anhalten des Antriebs erfolgen, wobei ein erneutes Starten des Antriebs das Betätigen eines Zündschlosses, eines Einschalters einer Start-Stopp-Anlage oder das Betätigen eines Pedal-Schalters am Kupplungs- oder Bremspedal erforderlich macht. Das Vorliegen der Bedingungen wird mittels Impulsgebern erfasst, welche Steuerimpulse aus dem Motortemperaturbereich des Verbrennungsmotors und Informationen aus dem Türkontaktbereich an einen Rechner übermitteln. Der Informationen aus dem Türkontaktbereich übermittelnde Impulsgeber erfasst hierbei, ob die Fahrertür zum Zwecke des Aussteigens geöffnet wurde.

Die DE 102 11 466 C1 beschreibt eine Start-Stopp-Automatik für ein Kraftfahrzeug mit Verbrennungsmotor. Bei der Entscheidung, ob ein automatisches Abschalten des Verbrennungsmotors erfolgen soll, werden unterschiedliche Kriterien berücksichtigt. Diese umfassen, dass die Motorhaube geschlossen ist, alle Fahrzeugtüren geschlossen sind, der Verbrennungsmotor seine Betriebstemperatur erreicht hat, die Temperatur im Fahrzeuginneren innerhalb eines akzeptablen Toleranzbereichs liegt und der Ladezustand der Fahrzeugbatterie ausreichend ist, um einen automatischen oder manuellen Neustart des Verbrennungsmotors sicherzustellen und während der Stoppphase andere Stromverbraucher des Kraftfahrzeugs ausreichend mit Strom zu versorgen.

Die DE 2045 423 A beschreibt eine Sicherheitseinrichtung, welche dafür sorgt, dass bei geöffneter Motorhaube oder verlassenem Fahrersitz ein Antreiben des Fahrzeugs durch den Motor unterbunden wird. Hierbei wird der Motor abgestellt, indem der Stromfluss zu einer Zündspule unterbrochen wird. Bei geschlossener Motorhaube erhält die Zündspule Strom und der Motor bleibt in Betrieb, während ein Öffnen der Motorhaube das Öffnen eines Schalters bewirkt und so den Strom zur Zündspule unterbricht. Des Weiteren kann ein zwischen der Sitzfläche des Fahrersitzes und dem Fahrzeugboden angeordnetes Schaltglied dafür sorgen, dass in einem automatischen Getriebe ein Wählschalthebel in die Neutralstellung bewegt wird, wenn sich der Fahrer vom Fahrersitz erhebt.

Die US 2001/0025220 A1 beschreibt eine Start-Stopp-Automatik für einen Verbrennungsmotor eines Fahrzeugs. Hierbei werden verschiedene Bedingungen geprüft und der Verbrennungsmotor außer Betrieb genommen oder ausgeschaltet, wenn diese Bedingungen vorliegen. Beispielsweise wird der Verbrennungsmotor ausgeschaltet, wenn die Fahrzeuggeschwindigkeit null beträgt, alle Türen des Fahrzeugs geschlossen sind, ein Ladezustand einer Batterie größer ist als ein vorbestimmter Ladezustand und eine Kühlwassertemperatur größer ist als eine vorbestimmte Kühlwassertemperatur.

Des Weiteren beschreibt die JP 2001 097 071 A eine Steuerungseinrichtung für ein Fahrzeug, welche einen Umwelt-Betriebsmodus aufweist, in welchem das Starten und Stoppen des Motors automatisch erfolgt. Die Steuerungseinrichtung berücksichtigt, ob ein Fahrzeuginsasse einen Fahrzeugsitz verlassen hat.

Die gattungsbildunde US 2012/253575 A offenbart den Oberbegriff des Anspruchs 1 und 6.

Bei aus dem Stand der Technik bekannten Verfahren zum Betreiben eines Kraftfahrzeugs, bei welchen der Antriebsmotor ausgeschaltet wird, kann es zu einer unerwünschten Schädigung von Komponenten des Kraftfahrzeugs kommen.

Aufgabe der vorliegenden Erfindung ist es daher, ein Verfahren der eingangs genannten Art sowie ein Kraftfahrzeug zu schaffen, welches ein besonders weitgehendes Unterbinden einer Beeinträchtigung von Komponenten des Kraftfahrzeugs ermöglicht.

Diese Aufgabe wird durch ein Verfahren mit den Merkmalen des Patentanspruchs 1 und durch ein Kraftfahrzeug mit den Merkmalen des Patentanspruchs 6 gelöst. Vorteilhafte Ausgestaltungen mit zweckmäßigen Weiterbildungen der Erfindung sind in den abhängigen Patentansprüchen angegeben.

Durch das Berücksichtigen des wenigstens einen weiteren Kriteriums wird vorliegend dafür gesorgt, dass das Abschalten von Antriebsmotor und Zündung nicht zu einer Schädigung von Komponenten des Kraftfahrzeugs wie beispielsweise des Antriebsmotors und/oder der Batterie führt.

Erfindungsgemäß werden die Zündung des Kraftfahrzeugs und als der wenigstens eine Antriebsmotor ein elektrischer Antriebsmotor des Kraftfahrzeugs ausgeschaltet, wenn eine zum Starten und Versorgen des elektrischen Antriebsmotors vorgesehene Batterie sich in einem Zustand befindet, welcher ein Starten des elektrischen Antriebsmotors und ein Betreiben desselben über eine vorbestimmte Zeitspanne hinweg zulässt. Beispielsweise bei einem Elektrofahrzeug ist nämlich ein ausreichender Ladezustand der Batterie nicht nur zum Starten des elektrischen Antriebsmotors notwendig, sondern auch zum Betreiben des elektrischen Antriebsmotors. Nicht nur das Starten, sondern auch der Betrieb des elektrischen Antriebsmotors über die vorbestimmte Zeitspanne hinweg werden also vorliegend sichergestellt.

Bei dem Kraftfahrzeug kann es sich insbesondere um ein Hybridfahrzeug handeln. Dann kann gemäß einer vorteilhaften Ausgestaltung der Erfindung zusätzlich zu der Zündung der elektrische Antriebsmotor und ein Verbrennungsmotor des Kraftfahrzeugs in Abhängigkeit vom Erfülltsein des wenigstens einen weiteren Kriteriums ausgeschaltet werden. Wird der Verbrennungsmotor ausgeschaltet, so wird von diesem auch kein Abgas mehr abgegeben.

Da das Kraftfahrzeug den elektrischen Antriebsmotor aufweist, so ist jedoch auch das Ausschalten der Zündung im Hinblick auf das Einsparen elektrischer Energie vorteilhaft. Dem liegt die Erkenntnis zugrunde, dass das Aktivhalten des elektrischen Antriebsmotors, welches sicherstellt, dass dieser rasch Leistung abgeben kann, zu einem besonders großen Bedarf an elektrischer Energie führt. Das Ausschalten der Zündung und des elektrischen Antriebsmotors führt also ebenfalls dazu, dass der Batterie des Kraftfahrzeugs weniger elektrische Energie entnommen wird.

Des Weiteren ist das Aufrechterhalten einer nicht zu niedrigen Temperatur eines Verbrennungsmotors als Antriebsmotor in Bezug auf die Emissionen von Abgas sinnvoll. Wenn nämlich der Verbrennungsmotor und die Abgasanlage auskühlen, so müssen anschließend in der Abgasanlage vorhandene Abgasnachbehandlungseinrichtungen erst wieder auf Temperaturen gebracht werden, um ihre das Abgas reinigende Funktion in ausreichendem Maße wahrzunehmen. Das Berücksichtigen des Kriteriums der Temperatur des Kühlmittels ist also auch im Hinblick auf die Abgasemissionen des Fahrzeugs vorteilhaft.

Als Schwellenwert der Temperatur des Kühlmittels, oberhalb welcher der Verbrennungsmotor und die Zündung des Kraftfahrzeugs ausgeschaltet werden, kann beispielsweise eine Temperatur aus dem Bereich von 30°C bis 50°C, insbesondere von 40°C, angesetzt werden. Befindet sich das Kühlmittel des Verbrennungsmotors nämlich in einem Temperaturbereich oberhalb der letztgenannten Werte, so ist ein besonders sanftes Anlassen des Verbrennungsmotors ermöglicht.

Zusätzlich oder alternativ werden vorliegend der wenigstens eine Antriebsmotor und die Zündung des Kraftfahrzeugs lediglich dann ausgeschaltet, wenn eine Außentemperatur größer ist als ein vorbestimmter Schwellenwert der Außentemperatur. Auch bei sehr niedriger Außentemperatur ist nämlich das Anlassen des Antriebsmotors ungünstig, da ein häufiges Anlassen bei besonders niedriger Außentemperatur zu einer Schädigung des Antriebsmotors führen kann. Als Schwellenwert der Außentemperatur, ab welcher ein Abschalten von Antriebsmotor und Zündung zugelassen wird, kann beispielsweise eine Temperatur zwischen -10°C und -20°C herangezogen werden. Insbesondere kann der Schwellenwert bei -15°C liegen. Bei Außentemperaturen unterhalb eines solchen Schwellenwerts stellt nämlich das Anlassen des Antriebsmotors, insbesondere des Verbrennungsmotors, eine vergleichsweise große Belastung für diesen dar.

Gemäß einer weiteren vorteilhaften Ausgestaltung kann vorgesehen sein, dass zumindest die Zündung des Kraftfahrzeugs eingeschaltet bleibt, wenn eine Temperatur des Kühlmittels des wenigstens einen Antriebsmotors größer ist als ein vorbestimmter oberer Schwellenwert der Temperatur. Dann kann nämlich über einen bei eingeschalteter Zündung nachlaufenden Lüfter die Temperatur des Kühlmittels und damit des Antriebsmotors abgesenkt werden. Dies kann beispielsweise bei einer vergleichsweise hohen Temperatur des Kühlmittels, etwa bei einer Temperatur von mehr als 110°C, insbesondere von mehr als 120°C, vorgesehen sein. Zusätzlich zu der Zündung kann auch der Antriebsmotor des Kraftfahrzeugs eingeschaltet bleiben.

Als weiter vorteilhaft hat es sich gezeigt, wenn ein Verbrennungsmotor und die Zündung des Kraftfahrzeugs dann ausgeschaltet werden, wenn eine zum Starten des Verbrennungsmotors vorgesehene Batterie sich in einem Zustand befindet, welcher zumindest ein einmaliges Starten des Verbrennungsmotors zulässt. Mit anderen Worten werden der Verbrennungsmotor und die Zündung des Kraftfahrzeugs nicht ausgeschaltet, wenn sich die Batterie in einem kritischen Zustand befindet. So wird sichergestellt, dass die Batterie durch die Abschaltung nicht geschädigt wird. Bei einer besonders weitgehenden Entladung der Batterie infolge des Anlassens bei niedrigem Ladezustand könnte sich nämlich andernfalls ein bleibender Schaden der Batterie einstellen.

Des Weiteren wird so sichergestellt, dass ein Kraftfahrzeug, welches vorab fremdgestartet wurde, nicht dann erneut automatisch abgeschaltet wird, wenn der Fahrer das Fahrzeug verlässt. Dies könnte nämlich bei dem soeben fremdgestarteten Fahrzeug dazu führen, dass ein erneuter Fremdstart notwendig würde. Dadurch, dass vorliegend sichergestellt wird, dass die Batterie zumindest ein erneutes Starten des Verbrennungsmotors ermöglicht, ist die Gefahr eines Liegenbleibens des Kraftfahrzeugs aufgrund eines zu geringen Ladezustands der Batterie sicher vermieden.

Bei der zum Starten des Verbrennungsmotors vorgesehenen Batterie kann es sich um eine übliche 12 V-Batterie handeln, deren Zustand im Hinblick auf das Abschalten des Verbrennungsmotors und der Zündung des Kraftfahrzeugs überwacht wird.

Bei einem Kraftfahrzeug, welches eine Hochvoltbatterie zum Versorgen eines elektrischen Antriebsmotors des Fahrzeugs aufweist, kann das Starten des Verbrennungsmotors jedoch auch durch die Hochvoltbatterie bewirkt werden. In diesem Fall wird der Zustand der Hochvoltbatterie überwacht, um sicherzustellen, dass zumindest ein einmaliges Starten des Verbrennungsmotors noch möglich ist.

Bei einem als Hybridfahrzeug ausgebildeten Kraftfahrzeug, bei welchem der Verbrennungsmotor nicht ausgeschaltet wird, wenn die Batterie sich in einem kritischen Zustand befindet, wird sichergestellt, dass bei laufendem Verbrennungsmotor und verlassenem Fahrzeug die Batterie geladen wird. So kann die Batterie nicht nur für ein eventuelles Starten des Verbrennungsmotors, sondern auch für den elektrischen Antriebsmotor des Kraftfahrzeugs elektrische Energie bereitstellen.

Zum Ermitteln des Zustands der Batterie können deren Alter und/oder eine Temperatur der Batterie und/oder eine Außentemperatur berücksichtigt werden. Entsprechende Parameter können als Kennlinien in einem Steuergerät abgelegt sein, mittels welchen sich dann der Zustand der Batterie ermitteln lässt. So kann mit besonders großer Zuverlässigkeit sichergestellt werden, dass die Batterie das insbesondere mehrmalige Starten des Verbrennungsmotors ermöglicht, selbst wenn vorher der Verbrennungsmotor und die Zündung des Kraftfahrzeugs ausgeschaltet wurden.

Das erfindungsgemäße Kraftfahrzeug weist wenigstens einen Antriebsmotor und eine Zündung auf sowie eine Steuerungseinrichtung, welche dazu ausgelegt ist, den wenigstens einen Antriebsmotor und die Zündung auszuschalten, wenn ein Fahrer das Kraftfahrzeug verlässt. Die Steuerungseinrichtung ist des Weiteren dazu ausgelegt, beim Ausschalten des wenigstens einen Antriebsmotors und der Zündung das Erfülltsein wenigstens eines weiteren Kriteriums zu berücksichtigen. Die Steuerungseinrichtung ist dazu ausgelegt, die Zündung des Kraftfahrzeugs und als den wenigstens einen Antriebsmotor einen elektrischen Antriebsmotor des Kraftfahrzeugs auszuschalten, wenn eine zum Starten und Versorgen des elektrischen Antriebsmotors vorgesehene Batterie sich in einem Zustand befindet, welcher ein Starten des elektrischen Antriebsmotors und ein Betreiben desselben über eine vorbestimmte Zeitspanne hinweg zulässt. Durch ein derartiges Kraftfahrzeug lässt sich sicherstellen, dass trotz des Ausschaltens des Antriebsmotors und der Zündung Komponenten wie etwa ein als Antriebsmotor dienender Verbrennungsmotor und eine Batterie des Kraftfahrzeugs nicht geschädigt werden.

Die für das erfindungsgemäße Verfahren beschriebenen Vorteile und bevorzugten Ausführungsformen gelten auch für das erfindungsgemäße Kraftfahrzeug und umgekehrt.

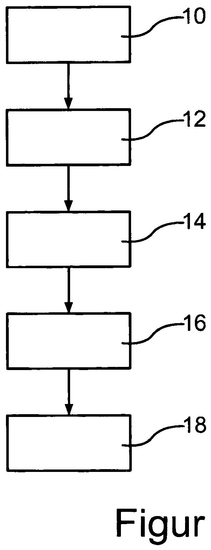

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt ein Ablaufdiagramm, welches Verfahrensschritte veranschaulicht, die in einem Kraftfahrzeug ablaufen, wenn ein Fahrer das Kraftfahrzeug verlässt.

In einem ersten Schritt 10 wird festgestellt, dass ein Fahrer eines Kraftfahrzeugs das Kraftfahrzeug verlässt, dessen Antriebsmotor jedoch noch läuft. Um festzustellen, ob der Fahrer das Kraftfahrzeug verlassen hat, können beispielsweise die Signale von Sensoren ausgewertet werden, welche das Betätigen von Pedalen des Kraftfahrzeugs, den Zustand eines Gurtschlosses und den Zustand einer Tür, insbesondere der Fahrertür erfassen. Betätigt also der Fahrer weder ein Bremspedal, noch ein Kupplungspedal oder ein Gaspedal und sind zudem der Sicherheitsgurt des Fahrers nicht angelegt und die Fahrertür geöffnet, so kann darauf geschlossen werden, dass der Fahrer das Kraftfahrzeug verlassen hat und ausgestiegen ist. Zusätzlich oder alternativ können ein Sitzbelegungssensor und/oder eine Kamera darüber Aufschluss geben, ob sich der Fahrer im Kraftfahrzeug befindet oder nicht, während der Antriebsmotor läuft.

Bei dem Antriebsmotor kann es sich um einen Verbrennungsmotor und um einen Elektromotor handeln. Um zu verhindern, dass das verlassene Kraftfahrzeug weiterhin schädliche Abgase produziert und die Batterie des Fahrzeugs belastet wird, wird vorliegend angestrebt, den Verbrennungsmotor und Elektromotor und eine Zündung des Kraftfahrzeugs abzuschalten. Dies soll jedoch nicht immer bereits dann stattfinden, sobald der Fahrer das Kraftfahrzeug verlässt. Vielmehr werden vorliegend weitere Kriterien als das Verlassen des Kraftfahrzeugs berücksichtigt, und lediglich bei einem Erfülltsein zumindest eines dieser weiteren Kriterien werden tatsächlich der Antriebsmotor - also der Verbrennungsmotor und der Elektromotor - und die Zündung des Kraftfahrzeugs ausgeschaltet.

Als ein Kriterium wird beispielsweise in einem Schritt 12 überprüft, ob die Temperatur eines Kühlmittels des Verbrennungsmotors unterhalb eines parametrierbaren Schwellenwerts liegt. Ist dies der Fall, ist also der Verbrennungsmotor des Kraftfahrzeugs vergleichsweise kalt, so werden vorliegend der Verbrennungsmotor und die Zündung des Kraftfahrzeugs nicht ausgeschaltet. So wird sichergestellt, dass der Verbrennungsmotor durch die Abschaltung nicht geschädigt wird. Des Weiteren verhält sich das Fahrzeug weiterhin im Hinblick auf die von dem Verbrennungsmotor ausgestoßenen Abgase korrekt, da nicht die Abgasanlage und Abgasnachbehandlungseinrichtungen abkühlen.

Zusätzlich oder alternativ kann in einem weiteren Schritt 14 das Ausschalten des Verbrennungsmotors und der Zündung davon abhängig gemacht werden, ob sich die Außentemperatur unterhalb eines parametrierbaren Schwellenwerts befindet. Bei besonders geringer Außentemperatur ist es nämlich ebenfalls ungünstig, das Fahrzeug abzuschalten. So werden vorliegend der Verbrennungsmotor und die Zündung des Kraftfahrzeugs lediglich dann ausgeschaltet, wenn die Außentemperatur größer ist als ein Schwellenwert der Außentemperatur.

In einem weiteren Schritt 16 wird der Zustand einer Fahrzeugbatterie überprüft. Befindet sich die Fahrzeugbatterie in einem kritischen Zustand, so werden ebenfalls der Verbrennungsmotor und der Elektromotor sowie die Zündung des Kraftfahrzeugs nicht abgeschaltet. Lediglich wenn die Fahrzeugbatterie noch einen Ladezustand aufweist, welcher sich oberhalb ihrer Startfähigkeitsgrenze befindet, werden vorliegend der Verbrennungsmotor und der Elektromotor sowie die Zündung außer Betrieb genommen. So wird sichergestellt, dass die Fahrzeugbatterie durch die Abschaltung nicht geschädigt wird. Bei einem Elektrofahrzeug oder Hybridfahrzeug wird hinsichtlich der Fahrzeugbatterie auch geprüft, ob diese zusätzlich zu der für das Starten des Elektromotors die für den Betrieb des Elektromotors notwendige elektrische Energie bereitstellen kann.

Weiterhin wird sichergestellt, dass, wenn das Kraftfahrzeug gerade fremdgestartet wurde, dieses nicht automatisch beim Verlassen wieder abgeschaltet wird und sich somit die Gefahr eines erneuten Liegenbleibens ergibt.

Ergibt das Überprüfen der Kriterien gemäß der Schritte 12, 14 und 16, dass dem Abschalten nichts im Wege steht, so werden in einem Schritt 18 sowohl der Verbrennungsmotor und der Elektromotor als auch die Zündung des Kraftfahrzeugs ausgeschaltet.

Das Abschalten des Kraftfahrzeugs, also des Antriebsmotors und der Zündung kann unmittelbar erfolgen, wenn die vorgenannten Kriterien überprüft sind. Es kann jedoch auch bei Erfülltsein der Kriterien ein zeitlich verzögertes Abschalten vorgesehen sein.

So können beispielsweise nach Ablauf einer vorbestimmten Zeitspanne, etwa einer Zeitspanne von 20 Sekunden bis 40 Sekunden, insbesondere von 30 Sekunden, nach dem Erfülltsein der Kriterien sowohl der Verbrennungsmotor und der Elektromotor als auch die Zündung des Kraftfahrzeugs ausgeschaltet werden. Dann hat ein kurzzeitiges Aussteigen des Fahrers nicht automatisch das Abschalten zu Folge.

## Patentansprüche

1. Verfahren zum Betreiben eines Kraftfahrzeugs, bei welchem wenigstens ein Antriebsmotor und eine Zündung des Kraftfahrzeugs ausgeschaltet werden, wenn ein Fahrer das Kraftfahrzeug verlässt (10), wobei beim Ausschalten (18) des wenigstens einen Antriebsmotors und der Zündung das Erfülltsein wenigstens eines weiteren Kriteriums berücksichtigt wird,
wobei die Zündung des Kraftfahrzeugs und als der wenigstens eine Antriebsmotor ein elektrischer Antriebsmotor des Kraftfahrzeugs ausgeschaltet werden, wenn eine zum Starten und Versorgen des elektrischen Antriebsmotors vorgesehene Batterie sich in einem Zustand befindet, welcher ein Starten des elektrischen Antriebsmotors und ein Betreiben desselben über eine vorbestimmte Zeitspanne hinweg zulässt,
**dadurch gekennzeichnet, dass**
zumindest die Zündung des Kraftfahrzeugs eingeschaltet bleibt, wenn eine Temperatur eines Kühlmittels des wenigstens einen Antriebsmotors größer ist als ein vorbestimmter oberer Schwellenwert der Temperatur.

2. Verfahren nach Anspruch 1,
**dadurch gekennzeichnet, dass**
zusätzlich zu der Zündung und dem elektrischen Antriebsmotor ein Verbrennungsmotor des Kraftfahrzeugs in Abhängigkeit vom Erfülltsein des wenigstens eines weiteren Kriteriums ausgeschaltet wird.

3. Verfahren nach Anspruch 1 oder 2,
**dadurch gekennzeichnet, dass**
der wenigstens eine Antriebsmotor und die Zündung des Kraftfahrzeugs ausgeschaltet werden, wenn als das wenigstens eine weitere Kriterium berücksichtigt wird, ob die Temperatur des Kühlmittels des wenigstens einen Antriebsmotors und/oder eine Außentemperatur größer ist als ein vorbestimmter unterer Schwellenwert der Temperatur.

4. Verfahren nach einem der Ansprüche 1 bis 3,
**dadurch gekennzeichnet, dass**
die Zündung des Kraftfahrzeugs und ein Verbrennungsmotor ausgeschaltet werden, wenn eine zum Starten des Verbrennungsmotors vorgesehene Batterie sich in einem Zustand befindet, welcher zumindest ein einmaliges Starten des Verbrennungsmotors zulässt.

5. Verfahren nach einem der Ansprüche 1 bis 4,
**dadurch gekennzeichnet, dass**
zum Ermitteln des Zustands der Batterie deren Alter und/oder eine Temperatur der Batterie und/oder eine Außentemperatur berücksichtigt werden.

6. Kraftfahrzeug mit wenigstens einem Antriebsmotor und einer Zündung und mit einer Steuerungseinrichtung, welche dazu ausgelegt ist, den wenigstens einen Antriebsmotor und die Zündung auszuschalten, wenn ein Fahrer das Kraftfahrzeug verlässt (10), wobei die Steuerungseinrichtung des Weiteren dazu ausgelegt ist, beim Ausschalten (18) des wenigstens einen Antriebsmotors und der Zündung das Erfülltsein wenigstens eines weiteren Kriteriums zu berücksichtigen,
wobei die Steuerungseinrichtung dazu ausgelegt ist, die Zündung des Kraftfahrzeugs und als den wenigstens einen Antriebsmotor einen elektrischen Antriebsmotor des Kraftfahrzeugs auszuschalten, wenn eine zum Starten und Versorgen des elektrischen Antriebsmotors vorgesehene Batterie sich in einem Zustand befindet, welcher ein Starten des elektrischen Antriebsmotors und ein Betreiben desselben über eine vorbestimmte Zeitspanne hinweg zulässt,
**dadurch gekennzeichnet, dass**
die Steuerungseinrichtung dazu ausgelegt ist, zumindest die Zündung des Kraftfahrzeugs eingeschaltet zu lassen, wenn eine Temperatur eines Kühlmittels des wenigstens einen Antriebsmotors größer ist als ein vorbestimmter oberer Schwellenwert der Temperatur.

## Claims

1. Method for operating a motor vehicle wherein at least one drive motor and an ignition of the motor vehicle are switched off if a driver leaves (10) the motor vehicle, wherein the fulfilment of at least one further criterion is taken into consideration when switching off (18) the at least one drive motor and the ignition,
wherein the ignition of the motor vehicle and, as the at least one drive motor, an electric drive motor of the motor vehicle are switched off if a battery provided in order to start up and supply the electric drive motor is in a condition which permits the electric drive motor to be started and operated over a predetermined period of time,
**characterised in that**
at least the ignition of the motor vehicle remains switched on if a temperature of a coolant of the at least one drive motor is greater than a predetermined upper threshold value for the temperature.

2. Method according to claim 1,
**characterised in that**
in addition to the ignition and the electric drive motor, a combustion engine of the motor vehicle is switched off depending on the fulfilment of the at least one further criterion.

3. Method according to claim 1 or 2,
**characterised in that**
the at least one drive motor and the ignition of the motor vehicle are switched off if, as the at least one further criterion, it is taken into consideration whether the temperature of the coolant of the at least one drive motor and/or an external temperature is greater than a predetermined lower threshold value for the temperature.

4. Method according to one of claims 1 to 3,
**characterised in that**
the ignition of the motor vehicle and a combustion engine are switched off if a battery provided in order to start up the combustion engine is in a condition which at least permits the combustion engine to be started once.

5. Method according to one of claims 1 to 4,
**characterised in that**
in order to determine the condition of the battery, its age and/or a temperature of the battery and/or an external temperature are taken into consideration.

6. Motor vehicle with at least one drive motor and an ignition and with a control device which is designed to switch off the at least one drive motor and the ignition if a driver leaves (10) the motor vehicle, wherein the control device is further designed to take into consideration the fulfilment of at least one further criterion when switching off (18) the at least one drive motor and the ignition, wherein the control device is designed to switch off the ignition of the motor vehicle and, as the at least one drive motor, an electric drive motor of the motor vehicle if a battery provided in order to start up and supply the electric drive motor is in a condition which permits the electric drive motor to be started and operated over a predetermined period of time,
**characterised in that**
the control device is designed to leave at least the ignition of the motor vehicle switched on if a temperature of a coolant of the at least one drive motor is greater than a predetermined upper threshold value for the temperature.

## Revendications

1. Procédé de fonctionnement d'un véhicule automobile, où au moins un moteur de propulsion et un allumage du véhicule automobile sont arrêtés lorsqu'un conducteur quitte (10) le véhicule automobile, la satisfaction d'au moins un autre critère étant prise en compte lors de l'arrêt (18) du au moins un moteur de propulsion et de l'allumage,
l'allumage du véhicule automobile et, comme le au moins un moteur de propulsion, un moteur de propulsion électrique du véhicule automobile étant arrêtés lorsqu'une batterie prévue pour le démarrage et l'alimentation du moteur de propulsion électrique se trouve dans un état qui permet un démarrage du moteur de propulsion électrique et un fonctionnement de celui-ci sur un intervalle de temps prédéterminé,
**caractérisé en ce que**
au moins l'allumage du véhicule automobile reste en marche lorsqu'une température d'un fluide de refroidissement du au moins un moteur de propulsion est supérieure à une valeur de seuil supérieure prédéterminée de la température.

2. Procédé selon la revendication 1,
**caractérisé en ce que**,
en plus de l'allumage et du moteur de propulsion électrique, un moteur à combustion du véhicule automobile est arrêté en fonction de la satisfaction du au moins un autre critère.

3. Procédé selon la revendication 1 ou 2,
**caractérisé en ce que**
le au moins un moteur de propulsion et l'allumage du véhicule automobile sont arrêtés lorsque, comme le au moins un autre critère, on prend en compte le fait que la température du fluide de refroidissement du au moins un moteur de propulsion et/ou une température extérieure est ou sont supérieures à une valeur de seuil inférieure prédéterminée de la température.

4. Procédé selon l'une quelconque des revendications 1 à 3,
**caractérisé en ce que**
l'allumage du véhicule automobile et un moteur à combustion sont arrêtés lorsqu'une batterie prévue pour le démarrage du moteur à combustion se trouve dans un état qui permet au moins un unique démarrage du moteur à combustion.

5. Procédé selon l'une quelconque des revendications 1 à 4,
**caractérisé en ce que**
pour déterminer l'état de la batterie, on prend en compte l'âge de celle-ci et/ou une température de la batterie et/ou une température extérieure.

6. Véhicule automobile avec au moins un moteur de propulsion et un allumage et avec un dispositif de commande qui est conçu pour arrêter le au moins un moteur de propulsion et l'allumage lorsqu'un conducteur quitte (10) le véhicule automobile, le dispositif de commande étant conçu en outre pour prendre en compte, lors de l'arrêt (18) du au moins un moteur de propulsion et de l'allumage, la satisfaction d'au moins un autre critère,
le dispositif de commande étant conçu pour arrêter l'allumage du véhicule automobile et, comme le au moins un moteur de propulsion, un moteur de propulsion électrique du véhicule automobile lorsqu'une batterie prévue pour le démarrage et l'alimentation du moteur de propulsion électrique se trouve dans un état qui permet un démarrage du moteur de propulsion électrique et un fonctionnement de celui-ci sur un intervalle de temps prédéterminé,
**caractérisé en ce que**
le dispositif de commande est conçu pour laisser au moins l'allumage du véhicule automobile en marche lorsqu'une température d'un fluide de refroidissement du au moins un moteur de propulsion est supérieure à une valeur de seuil supérieure prédéterminée de la température.
